(19) Europäisches Patentamt
European Patent Office
Office européen des brevets

(11) **EP 2 487 198 A1**

(12) **EUROPEAN PATENT APPLICATION**
published in accordance with Art. 153(4) EPC

(43) Date of publication:
**15.08.2012 Bulletin 2012/33**

(51) Int Cl.:
*C08J 9/00* (2006.01)    *C08L 23/12* (2006.01)

(21) Application number: **10821831.4**

(22) Date of filing: **13.09.2010**

(86) International application number:
**PCT/JP2010/065702**

(87) International publication number:
**WO 2011/043160 (14.04.2011 Gazette 2011/15)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **07.10.2009 JP 2009233132**

(71) Applicant: **Toray Industries, Inc.**
**Tokyo, 103-8666 (JP)**

(72) Inventors:
• **MATSUI, Ryosuke**
**Tsuchiura-shi**
**Ibaraki 300-0015 (JP)**

• **OHKURA, Masatoshi**
**Otsu-shi**
**Shiga 520-8558 (JP)**
• **FUJIMOTO, Soichi**
**Otsu-shi**
**Shiga 520-8558 (JP)**
• **KUMA, Takuya**
**Otsu-shi**
**Shiga 520-8558 (JP)**

(74) Representative: **Webster, Jeremy Mark et al**
**Mewburn Ellis LLP**
**33 Gutter Lane**
**London**
**EC2V 8AS (GB)**

(54) **POROUS POLYPROPYLENE FILM ROLL**

(57)    The porous polypropylene film roll of the present invention is a porous polypropylene film roll of which a porous polypropylene film comprising a polypropylene resin and having the average value of the porosities, εave, of 45 to 90% is wound around a core, and the unevenness of the thickness in the film machine direction is not more than 15%. The porous polypropylene film roll of the present invention has not only excellent air permeability and porosity but also excellent thickness uniformity, and therefore a porous polypropylene film roll which can efficiently utilize the performance of an electric storage device and is suitable for a separator for an electric storage device is provided.

**Description**

TECHNICAL FIELD

The present invention relates to a porous polypropylene film roll. Particularly, the present invention relates to a porous polypropylene film roll which has not only high porosity but also extremely excellent thickness uniformity and is suitable for a separator for an electric storage device.

BACKGROUND ART

Porous polypropylene films obtained by making a polypropylene film porous to form through holes have been applied to a wide variety of uses such as separators in a battery or an electrolytic capacitor, various separation membranes, and moisture-permeable waterproof membranes in garment and medical uses because of the properties such as permeability and low specific gravity.

As to pore-forming methods of a polypropylene film, various proposals have been made. Pore-forming methods can be broadly classified into wet methods and dry methods.

PRIOR ART DOCUMENTS

PATENT DOCUMENTS

Wet methods are adding a substance to be extracted to polypropylene as a matrix resin, mixing and sheeting them, and then extracting only the substance to be extracted using a good solvent for the substance to be extracted to form voids in the matrix resin, and a proposal in Patent Document 1 has been made, for example. On the other hand, with regard to dry methods, another method (so-called lamella stretching method), in which the lamella structure in the film before stretch is controlled by employing low temperature extrusion and high draft ratio at the time of melt extrusion, and the film is subsequently monoaxially oriented in the machine direction to cause cleavages at the lamellar interfaces for forming voids, is proposed in Patent Document 2, for example. Further, as a dry method, a method in which inorganic particles or a particulate resin immiscible with a matrix resin such as polypropylene are added in large amounts, and a sheet is formed and stretched to thereby cause cleavages at interfaces between the particles and the polypropylene resin to form voids has also been proposed in Patent Document 3, for example. Furthermore, what is called the $\beta$-crystal method in which voids are formed in a film by utilizing the difference in crystal density between $\alpha$-type crystals ($\alpha$-crystals) and $\beta$-type crystals ($\beta$-crystals) that are crystalline polymorphs of polypropylene and the crystalline transition has also been proposed in Patent Documents 4 to 6, for example.

Among the various pore-forming techniques described above, the $\beta$-crystal method is considered to be excellent as a pore-forming technique because it can control mechanical properties, thermal stability, and permeation performance by biaxial stretching and is excellent in productivity. For example, in Patent Document 7, improving the thickness uniformity of a film by leaving $\beta$-crystals in the film after longitudinal stretching and imparting a certain degree of orientation to the $\beta$-crystals has been proposed.

Upon focusing on the thickness uniformity of a porous film, with respect to pore-forming by extraction methods, a proposal combining a rolling treatment before extraction with extraction/stretching processes has been made in Patent Documents 8 and 9, for example. Further, in extraction methods, a polyolefin microporous membrane excellent not only in thickness uniformity but also in mechanical properties and dimension stability has been proposed in Patent Document 10, for example.

Further, a porous film using a filler and having excellent thickness uniformity has been proposed in Patent Document 11, for example.

Patent Document 1: JP 55-131028 A
Patent Document 2: JP 55-32531 B
Patent Document 3: JP 57-203520 A
Patent Document 4: JP 63-199742 A
Patent Document 5: JP 06-100720 A
Patent Document 6: JP 09-255804 A
Patent Document 7: WO 2002/066233
Patent Document 8: JP 2000-230072 A
Patent Document 9: JP 2001-2812 A
Patent Document 10: JP 2004-196870 A
Patent Document 11: JP 07-216120 A

## SUMMARY OF THE INVENTION

## PROBLEMS TO BE SOLVED BY THE INVENTION

The technique of Patent Documents 4 to 6 requires enlarging a void starting from the void formed by the volume change on the order of nanometers from β-crystals to α-crystals, and therefore there was a problem in uniformity of the properties.

According to the technique of Patent Document 7, the porosity is low because of the poor efficiency in pore-forming due to remaining β-crystals after longitudinal stretching; and since eddy current or electromagnetic induction is employed in the thickness measuring method, the thickness of a porous film cannot be accurately estimated, and besides accuracy in reading the thickness is poor. Therefore, the film had good uniformity in terms of measured values but poor thickness uniformity in fact, and was of little practical value as a separator for an electric storage device.

The technique of Patent Documents 8 and 9 is a technique for a porous film provided with low porosity by these proposals, and the film has not reached at the level of uniformity necessary for being used as a separator and was of little practical value as a separator for an electric storage device.

According to the technique of Patent Document 10, improving the uniformity reduces the porosity because the properties are controlled by using a high-molecular-weight polyolefin, and the film was of little practical value as a separator for a high-power-use electric storage device.

According to the technique of Patent Document 11, the film was a uniaxially stretched film; the thickness was not necessary uniform because the presence of unevenness of the stretch was judged in fact only by observation; and electrochemical side reactions occur because of the presence of a filler. Therefore the film was unsuitable as a separator for an electric storage device.

As described above, there was hitherto no porous film which was suitable for a separator for an electric storage device because of high porosity and also had excellent thickness uniformity, and there was a problem in that, since the porosity decreased when the thickness uniformity was emphasized, a high-power and high-performance electric storage device could not be achieved when the film was used as a separator for an electric storage device.

An object of the present invention is to solve the problems described above. That is, an object of the present invention is to provide a porous polypropylene film roll suitable for a separator for an electric storage device, which porous polypropylene film roll can maximally utilize the performance of the electric storage device because it has not only excellent air permeability and porosity but also excellent thickness uniformity.

## MEANS FOR SOLVING THE PROBLEMS

An object of the present invention is achieved by the porous polypropylene film roll below:

A porous polypropylene film roll of which a porous polypropylene film comprising a polypropylene resin and having the average value of the porosities, εave, of 45 to 90% is wound around a core, wherein the unevenness of the thickness in the film machine direction calculated by Equation [1] is not more than 15%.

$$\text{Unevenness of the thickness (\%)} = (T_{max} - T_{min}) / T_{ave} \times 100 \quad [1]$$

wherein,

Tave: average thickness of the thickness at 100 points measured at 30 mm intervals in the machine direction;
Tmax: maximum thickness of the thickness at 100 points measured at 30 mm intervals in the machine direction; and
Tmin: minimum thickness of the thickness at 100 points measured at 30 mm intervals in the machine direction.

In the present invention, the average value of the porosities, εave, refers to the average value of the porosities at 60 points measured at 50 mm intervals in the film machine direction as described below in methods for measuring the properties in Examples.

In the porous polypropylene film roll of the present invention, the average value of the porosities of the porous polypropylene film, εave, is preferably 60 to 90%.

In the porous polypropylene film roll of the present invention, the β-crystal formability of a polypropylene resin composition used as a material of the porous polypropylene film is preferably 50 to 90%.

In the porous polypropylene film roll of the present invention, the wound length is preferably 500 to 10,000 m.

In the porous polypropylene film roll of the present invention, the value of ($\varepsilon$max - $\varepsilon$min) / $\varepsilon$ave is preferably 0 to 0.08, wherein $\varepsilon$max is the maximum value of the porosities; $\varepsilon$min is the minimum value of the porosities; and $\varepsilon$ave is the average value of the porosities at 60 points measured at 50-mm intervals in the film machine direction.

In the porous polypropylene film roll of the present invention, the average value of the porosities, $\varepsilon$ave, is preferably 70 to 85%.

EFFECTS OF THE INVENTION

The porous polypropylene film roll of the present invention has not only excellent air permeability and porosity but also excellent thickness uniformity. Therefore, when used as a separator for an electric storage device, the distance between electrodes can be held constant. As a result, the performance of the electric storage device can be efficiently utilized.

BEST MODE FOR CARRYING OUT THE INVENTION

The polypropylene resin contained in the porous polypropylene film of the present invention is preferably an isotactic polypropylene resin having a melt flow rate (hereinafter MFR) in the range of 2 to 30 g/10 min. If the MFR is 5 to 20 g/10 min, it is more preferred in that high porosity and the stability of film formation can be simultaneously achieved. Here, MFR is an index defined by JIS K 7210 (1995) showing the melt viscosity of a resin, and it is widely used as a physical property value which characterizes polyolefin resins. In the case of a polypropylene resin, measurements are made at Condition M of JIS K 7210, that is, at a temperature of 230°C and a load of 2.16 kg.

If the isotactic index of an isotactic polypropylene resin is 90 to 99.9%, it is preferred because voids can be formed in a film efficiently because of the high crystallinity. When the isotactic index is in this range, a porous film with high air permeability can be readily obtained.

The porous polypropylene film in the present invention may be composed of 100% by mass of the isotactic polypropylene resin described above, and may also be composed of a polyolefin resin comprising the isotactic polypropylene resin in an amount of 90 to 99.9% by mass from the standpoint of achieving high air permeability and porosity. From the standpoint of heat-resistance, it is more preferred that a polypropylene resin constitute 92 to 99% by mass. Here, the polypropylene resin may be, needless to say, a homopolypropylene, which is a homopolymer of propylene, and may also be a polypropylene copolymer obtained by copolymerization of comonomers. A preferred comonomer is an unsaturated hydrocarbon, examples of which include ethylene and $\alpha$-olefins such as 1-butene, 1-pentene, 4-methylpentene-1, and 1-octene. The copolymerization ratio of such a comonomer in the polypropylene copolymer is preferably not more than 5% by mass, and more preferably not more than 3% by mass.

From the standpoint of achieving high air permeability and high porosity, the porous polypropylene film in the present invention is preferably composed of a polypropylene resin comprising an ethylene/$\alpha$-olefin copolymer in an amount of 0.1 to 10% by mass, more preferably 2 to 10% by mass, and still more preferably 3 to 8% by mass. Any preferred lower limit value can be combined with any preferred upper limit value. Examples of ethylene/$\alpha$-olefin copolymers include linear low-density polyethylene and ultra low-density polyethylene, among which the ultra low-density polyethylene composed of an ethylene/1-octene copolymer obtained by copolymerization with 1-octene can be preferably used. As such an ethylene/$\alpha$-olefin copolymer, commercially available products, for example, "Engage (registered trademark)" (type: 8411, 8452, 8100, and the like) available from Dow Chemical can be used.

The porous polypropylene film in the present invention has pores that penetrate both surfaces of the film and has air permeability (hereinafter referred to as through holes). These through holes are preferably formed in the film, for example, by biaxial stretching.

Specific examples of the methods include the $\beta$-crystal method. This achieves uniform properties, thinning of films, and high porosity.

To form through holes in a film using the $\beta$-crystal method, the $\beta$-crystal formability of a polypropylene resin composition used as a material of a porous polypropylene film is preferably 50 to 90%. When the $\beta$-crystal formability of a polypropylene resin is not less than 50%, a sufficient amount of $\beta$-crystals is present during film forming, and a sufficient amount of voids is formed in the film by utilizing the transition to $\alpha$-crystals, resulting in a film having excellent permeability. On the other hand, when the $\beta$-crystal formability of a polypropylene resin is not more than 90%, the stability of film formation is good because there is no need for the addition of a $\beta$-crystal nucleating agent in large amounts or for extremely high tacticity of the polypropylene resin used. Industrially, the $\beta$-crystal formability is more preferably 60 to 90%, and still more preferably 70 to 90%.

Examples of methods for controlling the $\beta$-crystal formability of a polypropylene resin at 50 to 90% include using a polypropylene resin having a high isotactic index and using as an additive a crystal nucleating agent ($\beta$-crystal nucleating agent) that selectively forms $\beta$-crystals when added into the polypropylene resin. As a $\beta$-crystal nucleating

agent, various pigment compounds and amide compounds can be preferably used. Examples thereof include amide compounds; tetraoxaspiro compounds; quinacridones; iron oxides of nanoscale size; alkali metal salts or alkaline earth metal salts of carboxylic acids typified, for example, by potassium 1,2-hydroxystearate, magnesium benzoate, magnesium succinate, or magnesium phthalate; aromatic sulfonic acid compounds typified, for example, by sodium benzenesulfonate or sodium naphthalenesulfonate; diesters or triesters of di- or tri-basic carboxylic acids; phthalocyanine pigments typified, for example, by phthalocyanine blue; binary compounds composed of an organic dibasic acid and an oxide, a hydroxide, or a salt of a metal of IIA group of the periodic table; and compositions composed of a cyclic phosphorus compound and a magnesium compound. In particular, the amide compound disclosed in JP 05-310665 A can be preferably used. The content of the β-crystal nucleating agent when added to the polypropylene resin composition is preferably 0.05 to 0.50% by mass, more preferably 0.1 to 0.40% by mass, based on the total polypropylene resin composition. Any preferred lower limit value can be combined with any preferred upper limit value.

In the porous polypropylene film roll of which the porous polypropylene film of the present invention is wound around a core (hereinafter also referred to simply as the film roll), the unevenness of the thickness in the machine direction calculated by Equation [1] needs to be not more than 15%.

$$\text{Unevenness of the thickness (\%)} = (T_{max} - T_{min}) / T_{ave} \times 100 \quad [1]$$

wherein,

Tave: average thickness of the thickness at 100 points measured at 30 mm intervals in the machine direction;
Tmax: maximum thickness of the thickness at 100 points measured at 30 mm intervals in the machine direction; and
Tmin: minimum thickness of the thickness at 100 points measured at 30 mm intervals in the machine direction.

When a porous film having an unevenness of the thickness of more than 15% is used as a separator, the battery performance can be much lower than the designed value because the distance between electrodes is ununiform in the electric storage device. The unevenness of the thickness is preferably not more than 10%, more preferably not more than 8%, and still more preferably not more than 5%. The unevenness of the thickness is ideally 0%, but the realistic lower limit value is 0.1%.

In the control of the unevenness of the thickness of a porous film, the control of the unevenness of the degree of porosity (the porosity) in a pore-forming process is important in addition to the control of the unevenness of the resin thickness as is known in common films. In particular, in a porous film having high porosity, such as the porous film of the present invention, the contribution of the latter, the control of the unevenness of the degree of porosity (the porosity) in a pore-forming process, is larger. Therefore, it has been difficult to reduce the unevenness of the thickness only by applying the method of reducing the unevenness of the thickness of common films.

Examples of the methods for suppressing the unevenness of the thickness in the machine direction of the porous film roll of the present invention to 15% or lower include a method satisfying the production conditions below.

<Control of unevenness of thickness in casting process>

First, unevenness of the thickness in the state of a film before stretching is suppressed. For achieving this, when casting a sheet-like molten polymer that has been melt-extruded and discharged from a T-die onto a metal drum, it is preferable to adjust, in the case of employing electro-pinning, the voltage to be applied and the selection of electrode shapes, and in the case of employing air knife casting, the flow rate of compressed air, temperature, wind direction, and wind width in order to avoid the variation of the landing points of the polymer on the drum. Especially in the case of a polypropylene film, since a value of a melt resistivity of a polypropylene resin is very high, it is difficult to completely prevent the variation of the landing points by electro-pinning, and therefore it is preferable to employ the air knife casting method.

In the air knife casting method, it is preferable to control unevenness of the crystallinity of a cast sheet while firmly fixing the landing point of the cast sheet. In common films, for suppressing unevenness of the thickness by the air knife method, it is preferable to forcibly blow air in such a manner that the air volume is increased to some degree. However, in the case of a porous film, there have been cases where an increased air volume has disturbed the air near a cast, causing unevenness of the temperature, leading to unevenness of the crystallinity of the cast sheet, resulting in greater unevenness of the porosity and unevenness of the thickness. Therefore, for the control of unevenness of the thickness in a porous film, it is preferred that the air volume be decreased while maintaining the pressure for pressing a cast sheet by air and that the blown air not cause unevenness of the crystallinity of a cast sheet. In particular, it is preferable to control the slit opening of outlets of an air knife apparatus and the direction of the outlets as follows. Specifically, when the slit opening of outlets of an air knife is too broad, the pressure for the pressing is dissipated, and it can be difficult to fix the landing point of a molten polymer and a metal drum. For decreasing the air volume while maintaining the air pressure, a smaller slit opening is preferred, but when it is too narrow, there can be cases where the adjustment for blowing air accurately onto the landing point is difficult or where an excessively increased wind speed deteriorates unevenness of the thickness. The slit opening is preferably 0.2 to 5.0 mm, more preferably 0.3 to 3.0 mm, and more preferably 0.3 to 1.0 mm. Any preferred lower limit value can be combined with any preferred upper limit value. The direction of outlets is preferably such that air is blown from the direction vertical to the tangential direction of a metal drum at the landing point of a polymer to the downstream side in the machine direction of a film. By blowing air to the downstream side, the air pressing the polymer will not flow upstream, so that it will not be in contact with a molten polymer with no support present between the T-die and the drum. Therefore, the polymer membrane will not vibrate, thereby stabilizing the landing point, and unevenness of the thickness can be suppressed; and in addition, the occurrence of unevenness of the temperature in the atmosphere of the cast is prevented, and unevenness of the porosity and unevenness of the thickness can be suppressed. The direction of outlets is preferably inclined from the direction vertical to the tangential direction of the metal drum to the downstream side by 2° to 10°, and more preferably 3° to 10°. When the direction of outlets is inclined from the direction vertical to the tangential direction of the metal drum by 2° or more, the air will not flow upstream. Therefore, unevenness of the temperature due to the disturbance of the air near the cast will not occur, and unevenness of the crystallinity of the cast sheet can be suppressed; and in addition, the vibration of the polymer membrane can be suppressed to reduce unevenness of the porosity and unevenness of the thickness. When the direction of outlets is inclined from the direction vertical to the tangential direction of the metal drum by 10° or less, the landing point will not be disturbed because the pressure for pressing the cast sheet by air is sufficient, and unevenness of the thickness can be suppressed. For decreasing the air volume while maintaining the air pressure, it is preferable to reduce the distance between air outlets of the air knife and the metal drum. Specifically, the distance between the air outlets and the metal drum is preferably not more than 3 mm, and more preferably not more than 2 mm. Further, it is preferred that the wind speed of the compressed air blown from the air knife be set by using low-pressure compressed air at a low speed compared to that in the case where a common polypropylene film is cast. In the β-crystal method, the metal drum temperature is 105 to 130°C, and therefore, in some cases, the disturbance of the air near the cast caused by blowing air thereon was large compared to that in the case where the drum temperature was around normal temperature, leading to destabilized film formation. By setting the wind speed lower than the wind speed during casting of a common polypropylene film (5 to 10 m/sec), air is not readily trapped between the drum and the polymer, and, consequently, film breakage starting from the part that is not in close contact with the drum will not occur. Specifically, the wind speed is preferably 0.1 to 7.0 m/sec at the slit tip of the air knife. In particular, from the standpoint of increasing the casting speed and improving the productivity, the wind speed is preferably set at 0.5 to 5.0 m/sec. Any preferred lower limit value can be combined with any preferred upper limit value.

<Control of unevenness of thickness in stretching process>

Further, for reducing the unevenness of the thickness of the porous polypropylene film of the present invention, it is preferable to add a temperature equal to or more than the longitudinal stretching temperature for several seconds in the preheating in the longitudinal stretching process in the machine direction following the casting process. Specifically, in the preheating step, by heating at a temperature equal to or more than the temperature 2°C higher than the longitudinal stretching temperature and not more than 145°C for 1 to 10 seconds, unevenness of the thickness can be reduced. The reason why heating in the preheating step reduces unevenness of the thickness is, though not clearly understood, considered as follows: when there is unevenness of the β-crystal fraction in a cast sheet in the casting process, unevenness of the porosity occurs in the longitudinal stretching process or in the transverse stretching process in the width direction, causing unevenness of the thickness; here, by heating uniformly within the range mentioned above in the preheating step, the β-crystals at the part where the β-crystal fraction is high undergo a transition to α-crystals to reduce the unevenness of the β-crystal fraction, leading to the reduction of the unevenness of the thickness. When the heating temperature in the preheating step is equal to or higher than the temperature 2°C higher than the longitudinal stretching temperature, the effect of improving unevenness of the thickness can be obtained. When the heating temperature in the preheating step is 145°C or lower, the air permeability is good because the β-crystals that undergo a transition to α-crystals will not increase excessively, and the deterioration of unevenness of the thickness due to an excessively stretched film in the preheating step will not occur. Further, when the preheating time is 1 to 10 seconds, the effect of improving unevenness of the thickness can be obtained, and the decrease of air permeability due to excessively increased β-crystals that undergo a transition to α-crystals will not occur.

For achieving the unevenness of the thickness in the machine direction of the porous film roll of the present invention of not more than 15%, in addition, it is preferable to restrict the stretching conditions in the preferred range described below. Specifically, in the longitudinal stretching in the film machine direction, it is preferable to employ the conditions of a film temperature of 125 to 140°C and a longitudinal stretching magnification of 4.5- to 6-fold. When the film temperature during longitudinal stretching is not less than 125°C, unevenness of the thickness can be suppressed because the unevenness of the stretch due to cold stretching does not occur; and, on the other hand, when not more than 140°C, transition from β-crystals to α-crystals will not occur before longitudinal stretching, and sufficient through holes are formed. The film temperature is more preferably 130 to 138°C. Any preferred lower limit value can be combined with any preferred upper limit value. When the longitudinal stretching magnification is not less than 4.5-fold, unevenness of the stretch does not readily occur because the stretching is sufficient; and, on the other hand, when the longitudinal stretching magnification is not more than 6-fold, the film will not break during the next step of transverse stretching in the width direction. The longitudinal stretching magnification is more preferably 4.8- to 6-fold, and still more preferably 5- to 6-fold. Any preferred lower limit value can be combined with any preferred upper limit value. During the longitudinal stretching in the machine direction, width shrinkage, called neck-down, in the film width direction is observed. The neck-down varies depending on the width during film forming even under the same stretching conditions, and varies depending on the temperature conditions and magnification during stretching. Smaller neck-down is advantageous for suppressing unevenness of the thickness. The neck-down is preferably 25% or less from the standpoint of suppressing unevenness of the thickness, and preferably 20% or less when using production equipment that provides a final film width of 2 m or more. For suppressing the neck-down to 25% or less, it is preferable, when stretching is performed by a difference in peripheral velocity of the rollers, to perform stretching with a zone where a film is not in contact with the rollers shortened in such a manner that the gap between the rollers is less than the diameter of the rollers used and that a film is run in a cross arrangement.

Further, for achieving the unevenness of the thickness in the machine direction of the porous film roll of the present invention of not more than 15%, in the transverse stretching in the film width direction, it is preferred that the transverse stretching magnification be 4- to 10-fold and that the transverse stretching temperature in the film width direction be 140 to 155°C. When the transverse stretching magnification in the film width direction is not less than 4-fold, a film with sufficiently high porosity can be obtained; and, on the other hand, when the transverse stretching magnification in the film width direction is not more than 10-fold, the frequent occurrence of film breakage can be prevented. The stretching magnification in the film width direction is more preferably 5- to 9-fold, and still more preferably 6- to 8-fold. Any preferred lower limit value can be combined with any preferred upper limit value. When the transverse stretching temperature in the film width direction is not less than 140°C, the stretching does not result in a cold stretching, and film breakage does not readily occur; and, on the other hand, when the transverse stretching temperature in the film width direction is not more than 155°C, through holes will not be clogged by heat, or the porosity will not be reduced. Further, the stretching temperature in the film width direction is more preferably 143 to 152°C. Any preferred lower limit value can be combined with any preferred upper limit value.

<Control of unevenness of thickness in process of heat-set and heatset with relaxation>

Further, the temperature during heat-set and heatset with relaxation after the transverse stretching in the film width direction is preferably from the transverse stretching temperature + 5°C to the transverse stretching temperature + 15°C and not more than 163°C. When the temperature during heat-set and relaxing is 5°C or more higher than the transverse stretching temperature, a film will not relax in a treatment zone, and unevenness of the thickness can be suppressed. In addition, when the temperature during heat-set and heatset with relaxation is not more than 163°C, through holes will not be clogged.
The porous polypropylene film roll of the present invention is preferably obtained by using as a roll core a tube (core) that is made, for example, of papers, plastics, and metals and has a width equal to or greater than the width of the film and by winding (rolling) a film around the core in the machine direction continuously by at least 100 m or more. The film length in the machine direction is more preferably 500 to 10,000 m. In the case of a porous film, it is still more preferably 700 to 5,000 m, especially preferably 1,000 to 3,000 m, and most preferably 1,000 to 2,000 m, because the film is crushed by the own weight of the film when rolled up too long. Any preferred lower limit value can be combined with any preferred upper limit value. Although the film width is not restricted, in the case of a usual film formation apparatus, production can be carried out with 0.005 to 10 m width, and it is preferable to slit to a 0.005 to 2 m width after that and roll up. The width after slitting may be an appropriate width depending on the intended use or, in the case of an electric storage device, on its size, preferably 0.005 to 1 m width, and more preferably 0.01 to 0.5 m width. Any preferred lower limit value can be combined with any preferred upper limit value.
The average value of the porosities of the porous polypropylene film in the present invention, εave, needs to be 45 to 90%. When the average value of the porosities, εave, is less than 45%, the electrical resistance can be large when the film roll is used as a separator for an electric storage device even if it is a low-power-use electric storage device. On the other hand, when the average value of the porosities, εave, is more than 90%, the mechanical strength of the film is too low, and therefore the film is compressed at a roll core of the roll by the own weight of the film when stored rolled up around the roll, which can affect the film structure to the extent that the properties of the film when used as a separator for an electric storage device are influenced. Especially as a separator for a high-power-use electric storage device, the average value of the porosities of the porous polypropylene film, $\varepsilon$ave, is preferably 60 to 90%. When the average value of the porosities, $\varepsilon$ave, is not less than 60%, the increase in electrical resistance when the film roll is used as a separator for an electric storage device can be prevented; the heat generation inside a battery can be suppressed even when used for high-power-use; and the energy loss can be decreased. From the standpoint of simultaneously achieving excellent separator properties and mechanical strength, the average value of the porosities of the film, $\varepsilon$ave, is preferably 65 to 85%, and more preferably 70 to 85%. Any preferred lower limit value can be combined with any preferred upper limit value. Examples of the methods for controlling the average value of the porosities of the film, $\varepsilon$ave, within such a preferred range include, for example, adding an ethylene/$\alpha$-olefin copolymer in an amount of 0.1 to 10% by mass into a polypropylene resin and forming through holes by the sequential biaxial stretching mentioned below, as described above. This allows the control within the desired porosity range.

In the porous film roll, the value of ($\varepsilon$max - $\varepsilon$min) / $\varepsilon$ave (variability in porosity) is preferably 0 to 0.08, wherein $\varepsilon$max is the maximum value of the porosities; $\varepsilon$min is the minimum value of the porosities; and $\varepsilon$ave is the average value of the porosities at 60 points measured at 50 mm intervals in the machine direction. When the variability in porosity is not more than 0.08, the variability in the presence of electrolyte solutions in an electric storage device does not readily occur, and the ionic conductivity is not affected. The variability in porosity is more preferably 0 to 0.07.

<Control of porosity variability>

The method for controlling the variability in porosity within the above-described preferred range is, firstly, heating a polymer melt-extruded into sheet form on a casting drum heated to 105 to 130°C and holding for 10 to 30 seconds to form a number of $\beta$-crystals in a non-oriented film. At this time, after the crystallization on the drum in a temperature range of 105 to 130°C, it is preferable, from the standpoint of improving the uniformity, to slowly cool at a reduced cooling rate using a roller heated to preferably 60 to 95°C, more preferably 70 to 90°C, but not to rapidly cool to normal temperature.

Secondly, during the transverse stretching in the width direction, the transverse stretching rate is preferably not more than 3,000%/min until the stretching magnification of 4-fold is reached. In the region where the stretching magnification is from over 4-fold until the final magnification, even if high-speed stretching is used from the standpoint of productivity, the influence is small in achieving uniform physical properties.

The porous polypropylene film in the present invention preferably has a total film thickness of 10 to 50 $\mu$m. When the total film thickness is not less than 10 $\mu$m, the film will not break when used; and, on the other hand, when not more than 50 $\mu$m, the volume percent of the porous film in an electric storage device is appropriate, and high energy density can be obtained. The total film thickness is more preferably 12 to 30 $\mu$m, and still more preferably 14 to 25 $\mu$m. Any preferred lower limit value can be combined with any preferred upper limit value.

The porous polypropylene film in the present invention may be a laminated film comprising a plurality of laminated layers having different or same composition. A laminated film is preferred because in some cases the surface properties of the film and the total properties of the film can be controlled individually within a preferred range. In that case, the three-layer lamination of A layer/B layer/A layer is preferred, but there is no problem if the two-layer lamination of A layer/B layer or a multilayer lamination having four or more layers is selected. The lamination thickness ratio is not restricted as long as the effects of the present invention are impaired.

The porous polypropylene film in the present invention may contain various additives such as antioxidants, heat stabilizers, antistatic agents, further, antiblocking agents, and fillers as long as the effects of the present invention are impaired. In particular, for the purpose of suppressing the oxidation degradation due to thermal histories of a polypropylene resin, it is preferable to add 0.01 to 0.50 parts by mass of an antioxidant relative to 100 parts by mass of the polypropylene resin.

An example of the methods of producing the porous polypropylene film and the porous film roll in the present invention will now be described specifically.

First, as a polypropylene resin, 80 to 100 parts by mass of a commercially available homopolypropylene resin having an MFR of 4 to 10 g/10 min, further, 1 to 10 parts by mass of an ultra low-density polyethylene resin having a melt index of 10 to 30 g/10 min, and 0.1 to 0.5 parts by mass of a $\beta$-crystal nucleating agent such as N,N'-dicyclohexyl-2,6-naphthalene dicarboxamide are mixed to provide a material mixed at a predetermined ratio in advance using a twin-screw extruder. At this time, the melt temperature is preferably 290 to 310°C. When the melt temperature is not less than 290°C, the $\beta$-crystal nucleating agent is readily soluble in the polypropylene resin, which will not cause filter clogging or film defects. On the other hand, when the melt temperature is not more than 310°C, the polypropylene resin will not thermally degrade.

Next, the above-mentioned mixed material is fed to a single-screw melt extruder to carry out melt extrusion at 200 to 240°C. At this time, it is preferable to further add an antioxidant from the standpoint, for example, of preventing the gelation of an ultra low-density polyethylene. Then, after foreign matter, modified polymers, and the like are removed by a filter placed midway of a polymer tube, the resultant is discharged from a T-die onto a casting drum to obtain a non-oriented sheet. At this time, the surface temperature of the casting drum is preferably 105 to 130°C from the standpoint of controlling the β-crystal fraction of the cast film high. From the standpoint of uniformizing the formation of through holes and increasing the uniformity of air permeability and porosity, it is preferred that the β-crystal fraction be preferably 40 to 80%. The β-crystal fraction is more preferably 45 to 80%, and still more preferable 50 to 75%. Any preferred lower limit value can be combined with any preferred upper limit value. Further, for bringing the sheet into close contact with the drum, it is preferable to employ the method in which air is blown using an air knife. It is preferred that, from the standpoint of increasing the uniformity of the properties, the non-oriented sheet solidified by being heated with the casting drum be then brought into contact with a roller heated to 60 to 95°C, preferably 70 to 90°C, for 0.05 to 5.0 seconds for slow cooling.

The non-oriented sheet thus obtained is biaxially stretched to form through holes in the film. As a method of biaxial stretching, the sequential biaxial stretching method in which stretching is performed in the width direction following the stretching in the film machine direction or in which stretching is performed in the machine direction following the stretching in the width direction, or the simultaneous biaxial stretching method in which stretching is performed approximately simultaneously in the machine direction and the width direction of the film can be used, but the sequential biaxial stretching method is preferably employed because a highly air-permeable film is easily obtained. In particular, it is preferred that transverse stretching be performed in the width direction following the longitudinal stretching in the machine direction.

For specific stretching conditions, the non-oriented sheet is first controlled at a temperature at which the sheet can be stretched longitudinally in the machine direction. As a method for controlling the temperature, the method using a temperature-controlled rotating roller, the method using a hot-air oven, and the like can be employed. The temperature during longitudinal stretching in the machine direction is preferably 125 to 140°C, and more preferably 130 to 138°C, from the standpoint of providing excellent film properties and increasing the uniformity.

The longitudinal stretching magnification is preferably 4.5- to 6-fold, more preferably 4.8- to 6-fold, and still more preferably 5- to 6-fold. In the process of the longitudinal stretching in the machine direction, all the β-crystals of polypropylene formed in the non-oriented sheet undergo a transition to α-crystals.

Next, the uniaxially stretched polypropylene film is introduced into a stenter-type stretching machine with the ends of the film gripped. Then, the film is heated preferably to 140 to 155°C and transversely stretched in the width direction preferably 4- to 10-fold, and more preferably 5- to 9-fold. The transverse stretching rate at this time is preferably 500 to 6,000%/min, and more preferably 1,000 to 5,000%/min. Any preferred lower limit value can be combined with any preferred upper limit value. In particular, until the stretching magnification of 4-fold is reached, not more than 3,000%/min is preferred. In the region where the transverse stretching magnification is from over 4-fold until the final magnification, even if high-speed stretching is used from the standpoint of productivity, the influence is small in achieving uniform physical properties.

Then, heat-set is performed continuously in the stenter, and the heat-set temperature is preferably from the transverse stretching temperature + 5°C to the transverse stretching temperature + 15°C and a heat-set temperature of not more than 163°C. The heat-set time is preferably 5 to 30 seconds. Further, the heat-set may be performed while relaxing the film in the machine direction and/or width direction of the film, and the relaxation rate especially in the width direction is preferably 7 to 15% from the standpoint of thermal dimension stability.

The porous polypropylene film obtained by performing film formation and stretching under the conditions as described above is rolled up in the machine direction continuously by at least 100 m or more by using as a roll core a core that is made, for example, of papers, plastics, and metals and has a width equal to or greater than the width of the film to obtain a film roll. At this time, from the standpoint of preventing the change in properties after the rolling, the rolling tension is preferably a low tension to the extent that neither a wrinkle nor looseness occurs on the film, and the rolling tension is preferably 5 to 50 N/m. In particular, when the rolling tension is 5 to 30 N/m, it is preferred in that, even when the film roll has been left to stand, the change in properties at the roll core side of the roll due to compression can be prevented.

The porous polypropylene film roll of the present invention, when used as a separator for an electric storage device, provides low variability in properties among electric storage devices and uniform quality because it has not only excellent air permeability and porosity but also extremely low variability in the air permeability and the porosity. Therefore, the porous polypropylene film roll of the present invention can be especially preferably used as a separator for a large-sized lithium ion secondary battery used particularly in electric vehicles and the like.

Examples

The present invention will now be described in detail by way of examples. The properties were measured and evaluated by the following method.

[β-crystal formability and β-crystal fraction]

As a sample, 5 mg of a porous polypropylene film was collected in an aluminum pan and measured by using a differential scanning calorimeter (RDC220 manufactured by Seiko Instrument Inc.). First, the temperature is raised from room temperature to 240°C at 10°C/min under a nitrogen atmosphere (1st run), held there for 10 minutes, and then cooled to 20°C at 10°C/min. For the melting peaks observed when the temperature is raised again at 10°C/min (2nd run) after holding for 5 minutes, the melting peaks that appears in the temperature range of 145 to 157°C are considered a melting peak of β-crystals, and the melting peaks observed at 158°C or above are considered a melting peak of α-crystals. The heat of fusion of each crystal is determined from the area of the region enclosed by the baseline drawn on the basis of the flat portion in the high temperature side and the peaks, and, when taking the heat of fusion of α-crystals as ΔHα, and the heat of fusion of β-crystals as ΔHβ, the value calculated from the following equation is taken as β-crystal formability. The calibration of the heat of fusion was performed using indium.
$$\beta\text{-crystal formability (\%)} = [\Delta H\beta / (\Delta H\alpha + \Delta H\beta)] \times 100$$

By calculating the abundance of the β-crystals similarly from the melting peaks observed in the 1st run using a non-oriented film as a sample, the β-crystal fraction of the sample in the state of a film can be calculated.

[Unevenness of thickness]

With a dial gauge (upright dial gauge R1-A manufactured by OZAKI MFG. CO., LTD.), using a disk with a diameter of 10 mm as a gauge head and using a weight of 100 g as a load, under conditions of measuring pressure of 12.5 kPa, the thickness at 100 points were measured at the center of a film roll at a measured center interval of 30 mm continuously in the machine direction. From the measurement results, unevenness of the thickness was calculated using the Equation [1] below.
$$\text{Unevenness of the thickness (\%)} = (\text{Tmax} - \text{Tmin}) / \text{Tave} \times 100 \quad [1]$$

wherein,

Tave: average thickness of the thickness at 100 points measured at 30-mm intervals in the machine direction;
Tmax: maximum thickness of the thickness at 100 points measured at 30-mm intervals in the machine direction; and
Tmin: minimum thickness of the thickness at 100 points measured at 30-mm intervals in the machine direction.

[Air resistance]

A square with a size of 100 mm × 100 mm was cut out from a film to provide a sample. Using a B-type Gurley tester according to JIS P 8117 (1998), the time for permeation of 100 ml of air was measured at 23°C and a relative humidity of 65%. The measurements were made three times for different samples, and the average value of the time for permeation was taken as the air permeability of the film. The fact that the value of the air permeability is a finite value confirms that through holes has been formed on the film.

[Porosity]

The film roll was cut from an arbitrary place at the middle position in the width direction continuously to the machine direction into 60 rectangular films with a size of 50 mm (machine direction) × 30 mm (width direction) to provide samples. Using an electronic hydrometer (SD-120L manufactured by Mirage Trading Co., Ltd.), specific gravity (ρ) was measured under an atmosphere at room temperature of 23°C and a relative humidity of 65%.
Next, three areas were cut out from arbitrary places of the measured film roll, heat-pressed at 280°C and 5 MPa, and then rapidly cooled with water at 25°C to produce a sheet with pores completely eliminated. The specific gravity of this sheet was measured similarly by the above-described method, and the average value of the specific gravity of the three areas was taken as the specific gravity (d) of the resin. In Examples described below, the specific gravity of the resin d was 0.91 in all cases. Porosities were calculated from the specific gravity of the film and the specific gravity of the resin by the following equation.

$$\text{Porosity } (\%) = [(d - \rho) / d] \times 100$$

The porosity was calculated for each sample (60), and the arithmetic average value thereof was taken as the average value of the porosities (εave). Therefore, the average value of the porosities, εave, means the average value of the porosities at 60 points measured at 50-mm intervals in the film machine direction. Further, taking the highest porosity as the maximum value of the porosities (εmax), and the lowest porosity as the minimum value of the porosities (εmin), the uniformity of porosity was calculated by [(εmax - εmin) / εave].

[Uniformity of battery performance]

Lithium cobalt oxide ($LiCoO_2$), acetylene black, and polyvinylidene fluoride were mixed at a mass ratio of 94/3/3, and the resulting mixture was dispersed in N-methyl-2-pyrrolidone to obtain a slurry. The slurry as a positive electrode mixture was uniformly applied to both sides of a 10 μm thick aluminum foil for a positive electrode current collector and dried. The resultant was compression molded to produce a strip-shaped positive electrode. A strip-shaped positive electrode with a thickness of 40 μm, a width of 45 mm, and a length of 4,000 mm was obtained. Further, graphite and polyvinylidene fluoride were mixed at a mass ratio of 9:1 to obtain a negative electrode mixture, which was dispersed in N-methyl-2-pyrrolidone to obtain a slurry. This negative electrode mixture slurry was uniformly applied as a negative electrode current collector to both sides of a strip-shaped copper foil with a thickness of 10 μm and dried. The resultant was compression molded to produce a strip-shaped negative electrode precursor. With respect to a treatment liquid for the negative electrode precursor, $LiC_4F_9SO_3$ was dissolved in trimethyl phosphate, after which ethylene carbonate was added thereto and mixed to prepare a treatment liquid. The negative electrode precursor was sandwiched on both sides via separators impregnated with the treatment liquid by Li foils to which a lead body was pressed and placed in a holder, and discharge and charge were performed using the negative electrode precursor as a positive electrode and the Li electrode as a negative electrode. Thereafter, disassembling was performed, and the negative electrode precursor was washed with dimethyl carbonate and dried to produce a negative electrode. A strip-shaped negative electrode with a thickness of 50 μm, a width of 46 mm, and a length of 4,000 mm was obtained.

As an electrolyte solution, the electrolyte solution "MiReT" (registered trademark) available from Mitsui Chemicals, Inc., which is produced by dissolving $LiPF_6$ as a solute in a mixed solvent of ethylene carbonate:dimethyl carbonate = 3:7 (mass ratio) to a concentration of 1 mol/L, was used.

Next, the above-described strip-shaped positive electrode and the above-described strip-shaped negative electrode were superimposed via each porous polypropylene film slit to a width of 48 mm in Examples/Comparative Examples below, and spirally wound to obtain a spiral electrode assembly, which was then packed in a bottomed cylindrical battery case, and the lead body of the positive electrode and the negative electrode were welded, after which the above-described electrolyte solution was injected into the battery case. The opening of the battery case was sealed, and the battery was preliminarily charged to produce a cylindrical organic electrolyte secondary battery. Two hundreds of batteries were produced for each of Examples/Comparative Examples.

Using the batteries produced as described above, the charge/discharge operation of charging at 1,600 mA to 4.2 V for 3.5 hours and discharging at 1,600 mA to 2.7 V was performed under an atmosphere at 25°C to examine the discharge capacity. For 50 batteries, the discharge capacity was evaluated, and the variability was evaluated according to the criteria described below. The variability was calculated by [(Maximum discharge capacity - Minimum discharge capacity) / Average discharge capacity of 50 batteries] × 100.

A: The variability in discharge capacity was not more than 3%.

B: The variability in discharge capacity was more than 3% and not more than 5%.

C: The variability in discharge capacity was more than 5%.

[Ionic conductivity]

$LiPF_6$ was dissolved at a rate of 1 mol/L in a mixed solvent of propylene carbonate and dimethyl carbonate of equal volume to prepare an electrolyte solution. A nickel positive electrode (polar plate size: 50 mm × 70 mm), a graphite negative electrode, and a porous polypropylene film between the positive/negative electrodes were arranged in the electrolyte solution, and a monolayer laminate cell with a designed capacity of 18 mAh was produced by using an aluminum enclosure. The Cole-Cole plot was measured by the complex impedance method using an LCR meter to determine the real part of the impedance at 20,000 Hz, which was taken as an index of ionic conductivity. The measurements were made at 25°C in a glove box under an argon atmosphere. Thirteen samples were taken at 250 mm intervals from an arbitrary place in the machine direction of the film roll (when taking the starting point as 0 mm, total length is 3,000 mm) for measurements, and the arithmetic mean of the measured values was evaluated according to the criteria below.

A: The average value of the impedance (real part) was less than 0.12 $\Omega$.

B: The average value of the impedance (real part) was 0.12 to 0.15 $\Omega$.

C: The average value of the impedance (real part) was more than 0.15 $\Omega$.

[Low-rate power characteristic]

A lithium cobalt oxide ($LiCoO_2$) positive electrode with a thickness of 40 $\mu$m manufactured by Hohsen Corp. was die cut into a circle with a diameter of 15.9 mm, and a graphite negative electrode with a thickness of 50 $\mu$m manufactured by Hohsen Corp. was die cut into a circle with a diameter of 16.2 mm, after which each separator of Examples/Comparative Examples was die cut to a diameter of 24 mm. From the bottom, the negative electrode, the separator, and the positive electrode were superimposed in the order mentioned such that the positive electrode active material-side and the negative electrode active material-side faced each other, and placed in a stainless steel small container with a lid (HS cell manufactured by Hohsen Corp.). The container and the lid are insulated; the container is in contact with the copper foil of the negative electrode, and the lid is in contact with the aluminum foil of the positive electrode. An electrolyte solution obtained by dissolving $LiPF_6$ as a solute in a mixed solvent of ethylene carbonate: dimethyl carbonate = 3:7 (volume ratio) to a concentration of 1 mol/L was injected into the container and hermetically sealed. A battery was produced for each of Examples/Comparative Examples.

For each of the secondary batteries produced, the charge/discharge operation of charging at 3 mA to 4.2 V (the charge operation was performed for 3.5 hours by constant-current charge until 4.2 V and by constant-voltage charge after reaching 4.2 V) and discharging at 3 mA to 2.7 V was performed under an atmosphere at 25°C to examine the discharge capacity. Further, the charge/discharge operation of charging at 3 mA to 4.2 V and discharging at 12 mA to 2.7 V was performed to examine the discharge capacity.

The values obtained by the equation: [(Discharge capacity at 12 mA) / (Discharge capacity at 3 mA)] $\times$ 100 were evaluated according to the criteria below. The number of tests was 20, and evaluation was performed using the average value thereof.

A: 95% or more
B: Not less than 85% and less than 95%
C: Less than 85%

(Example 1)

From a scale hopper to a twin-screw extruder, 99.5 parts by mass of a homopolypropylene FLX80E4 available from Sumitomo Chemical Co., Ltd., 0.3 parts by mass of N,N'-dicyclohexyl-2,6-naphthalene dicarboxyamide (NU-100 available from New Japan Chemical Co., Ltd.) that serves as a $\beta$-crystal nucleating agent, and further 0.1 parts by mass each of "IRGANOX" (registered trademark) 1010 and "IRGAFOS" (registered trademark) 168 available from Ciba Specialty Chemicals K. K. that serve as an antioxidant were fed as a material such that they are mixed at the above ratio, melt-kneaded at 300°C, discharged from a die in strands, cooled to solidify in a water tank at 25°C, and cut into chips to prepare a polypropylene composition (MFR: 8 g/10 min. Hereinafter, simply referred to as $\beta$PP) as a material resin of a film. Further, to 30 parts by mass of "Engage (registered trademark)" 8411 (melt index: 18 g/ 10 min) available from Dow Chemical that is an ultra low-density polyethylene resin and 63 parts by mass of a homopolypropylene FLX80E4 (MFR: 7 g/10 min) available from Sumitomo Chemical Co., Ltd., "IRGANOX" (registered trademark) 1010 and "IRGAFOS"(registered trademark) 168 available from Ciba Specialty Chemicals K. K. that serve as an antioxidant were added such as in an amount of 5 parts by mass and 2 parts by mass, respectively. The resulting mixture was fed to a twin-screw extruder, melt-kneaded at 220°C, extruded in strands, and solidified with cooling water at 25°C, and a polyethylene masterbatch (hereinafter simply referred to as PE master) was produced by means of cutting with a chip cutter into chips.

Ninety parts by mass of $\beta$PP and 10 parts by mass of the PE master were mixed, and the resulting mixture was fed to a single-screw extruder, melt-extruded at 210°C, and discharged from a T-die through a sintered filter with a 40 $\mu$m cut-off onto a casting drum having a controlled surface temperature of 120°C. Compressed air was air knife-cast at a wind speed of 6 m/sec using an air knife (tip slit opening: 0.8 mm) inclined by 3° from the direction vertical to the tangential direction of the landing point of a polymer to the downstream direction, whereby the molten polypropylene resin was brought into close contact with the casting drum in the form of a sheet. The sheet was held in close contact with the casting drum for 15 seconds, and further slowly cooled for 3 seconds on a metal roller having a controlled surface temperature of 80°C to obtain a non-oriented sheet.

Then, heating was carried out using a ceramic roller heated to 125°C (seven ceramic rollers for preheating was installed, and the preheating was carried out for 35 seconds in total.), and 5-fold longitudinal stretching was performed in the machine direction of the film by a difference in peripheral velocity of the roller also heated to 130°C and the roller cooled to 30°C. At this time, the film temperature in the stretching section was measured using a radiation thermometer (emissivity (ε) was set at 0.95) to be 132°C. The neck-down during the longitudinal stretching in the machine direction was 21%.

Next, the film was introduced into a tenter-type stretching machine with the ends held by clips and transversely stretched 6.5-fold in the width direction at 150°C. In the stretching, the transverse stretching rate was constant at 1,800%/min from the start to the end of the stretching. Then, the film was heat-treated at 158°C for 6 seconds while being relaxed in the width direction by 10%, after which both the ear portions in the film width direction were slit by 200 mm each for removal, and the film was rolled up by 500 m around a paper tube with an outer diameter of 172.4 mm at a tension of 25 N/m to obtain a porous polypropylene film roll having a thickness of 20 μm. The β-crystal formability of the polypropylene resin composition that was the material of this porous polypropylene film was 82%.
This porous polypropylene film roll had an unevenness of the thickness of 10%, an air resistance of 180 seconds, the average value of the porosities of 73%, and a uniformity of porosity of 0.06. Further, as a result of the measurement using this porous polypropylene film, the uniformity of battery performance was A; the ionic conductivity was A; and the low-rate power characteristic was A, showing that this porous polypropylene film was especially suitable for a separator for a high-power electric storage device.

(Example 2)

Film formation was carried out in the same manner as in Example 1 except that the wind speed of compressed air from the air knife was 5 m/sec and that the longitudinal stretching magnification in the machine direction was 5.5-fold, and a porous polypropylene film roll with a thickness of 20 μm was rolled up by 1,000 m. The neck-down during the longitudinal stretching in the machine direction was 19%. The β-crystal formability of the polypropylene resin composition that was the material of this porous polypropylene film was 82%.
This porous polypropylene film roll had an unevenness of the thickness of 7%, an air resistance of 130 seconds, the average value of the porosities of 76%, and a uniformity of porosity of 0.05. Further, as a result of the measurement using this porous polypropylene film, the uniformity of battery performance was A; the ionic conductivity was A; and the low-rate power characteristic was A, showing that this porous polypropylene film was especially suitable for a separator for a high-power electric storage device.

(Example 3)

Film formation was carried out in the same manner as in Example 1 except that the wind speed of compressed air from the air knife was 5 m/sec and that stretching was performed by heating with a radiation heater (output: 3 kW, surface temperature: 600°C) such that the film temperature during longitudinal stretching in the machine direction was 138°C, a porous polypropylene film roll with a thickness of 20 μm was rolled up by 2,000 m. The neck-down during the longitudinal stretching in the machine direction was 18%. The β-crystal formability of the polypropylene resin composition that was the material of this porous polypropylene film was 82%.
This porous polypropylene film roll had an unevenness of the thickness of 6%, an air resistance of 200 seconds, the average value of the porosities of 71%, and a uniformity of porosity of 0.06. Further, as a result of the measurement using this porous polypropylene film, the uniformity of battery performance was A; the ionic conductivity was A; and the low-rate power characteristic was A, showing that this porous polypropylene film was especially suitable for a separator for a high-power electric storage device.

(Example 4)

Casting was performed in the same manner as in Example 1 except that 96 parts by mass of βPP and 4 parts by mass the PE master were mixed and that compressed air was blown from the air knife from the direction vertical to the tangential direction of the landing point of a polymer to obtain a non-oriented sheet.

Next, heating was carried out using a ceramic roller heated to 120°C and a radiation heater (output: 3 kW), and 4.8-fold longitudinal stretching was performed in the machine direction of the film by a difference in peripheral velocity of the roller also heated to 128°C and the roller cooled to 30°C. At this time, the film temperature in the stretching section was 127°C. The neck-down during the longitudinal stretching in the machine direction was 24%.

Next, the film was introduced into a tenter-type stretching machine with the ends held by clips and transversely stretched 7-fold in the width direction at 150°C. In the stretching, the transverse stretching rate was constant at 2,200%/min from the start to the end of the stretching. Then, the film was heat-treated at 158°C for 6 seconds while being relaxed in the width direction by 10%, after which both the ear portions in the film width direction were slit by 200 mm each for removal, and the film was rolled up by 500 m around a paper tube with an outer diameter of 172.4 mm at a tension of 25 N/m to obtain a porous polypropylene film roll having a thickness of 25 μm. The β-crystal formability of the polypropylene resin composition that was the material of this porous polypropylene film was 80%.

This porous polypropylene film roll had an unevenness of the thickness of 13%, an air resistance of 280 seconds, the average value of the porosities of 68%, and a uniformity of porosity of 0.09. Further, as a result of the measurement using this porous polypropylene film, the uniformity of battery performance was B; the ionic conductivity was B; and the low-rate power characteristic was A, showing that this porous polypropylene film was suitable as a separator for a high-power electric storage device.

(Example 5)

A porous film was formed in the same manner as in Example 1 except that βPP was 100 parts by mass. At this time, the setting of the air knife during casting was the same as in Example 4; the magnification during longitudinal stretching in the film machine direction was 4.5-fold; and the stretching roller temperature was 125°C, resulting in the film temperature being 125°C. Then, film formation was carried out in the same manner as in Example 1 after the transverse stretching in the width direction. The β-crystal formability of the polypropylene resin composition that was the material of this porous polypropylene film was 86%.

This porous polypropylene film roll had an unevenness of the thickness of 15%, an air resistance of 350 seconds, the average value of the porosities of 63%, and a uniformity of porosity of 0.08. Further, as a result of the measurement using this porous polypropylene film, the uniformity of battery performance was B; the ionic conductivity was B; and the low-rate power characteristic was B, showing that this porous polypropylene film was suitable as a separator for a high-power electric storage device.

(Comparative Example 1)

One hundred parts by mass of βPP was melt-extruded at 200°C, discharged from a T-die onto a casting drum having a controlled surface temperature of 120°C, cast using an air knife so as to be in close contact with the drum for 12 seconds, and further cooled on a metal roller having a controlled surface temperature of 30°C for 3 seconds to obtain a non-oriented sheet. Casting was performed in such a manner that the wind speed of compressed air from the air knife was 8 m/sec and that the compressed air was blown from the direction vertical to the tangential direction in the landing point of a polymer on the casting drum.

Then, the sheet was preheated using a ceramic roller heated to 90°C, and longitudinally stretched 4-fold in the machine direction by a difference in peripheral velocity of the roller also heated to 90°C and the roller cooled to 145°C. The film temperature at this time was 90°C. The percent neck-in was 15%. Next, an annealing treatment was performed for 5 seconds while stretching this longitudinally uniaxially stretched film by 10% in the longitudinal direction continuously on the roller heated to 145°C.

Next, the film was introduced into a tenter-type stretching machine with the ends held by clips and transversely stretched 6-fold in the width direction at 140°C. In the stretching, the transverse stretching rate was constant at 6,000%/min from the start to the end of the stretching. Then, the film was heat-treated at 155°C for 6 seconds as it was, after which both the ear portions in the film width direction were slit by 200 mm each for removal, and the film was rolled up by 500 m around a paper tube with an outer diameter of 172.4 mm at a tension of 25 N/m to obtain a porous polypropylene film roll having a thickness of 40 μm. The β-crystal formability of the polypropylene resin composition that was the material of this porous polypropylene film was 86%.

The central part of the film roll obtained was evaluated for thickness uniformity using eddy current according to the evaluation of thickness uniformity described in WO 2002/066233, and the thickness uniformity was found to be 0.05; however, the unevenness of the thickness measured by the evaluation method of the present invention was poor at 27%, showing that the variability in battery properties was large. Further, this porous polypropylene film roll had an air resistance of 800 seconds, the average value of the porosities of 57%, and a uniformity of porosity of 0.13. Further, as a result of the measurement using this porous polypropylene film, the uniformity of battery performance was C; the ionic conductivity was C; and the low-rate power characteristic was B.

(Comparative Example 2)

Film formation was carried out under the same conditions as in Comparative Example 1 except that the melt extrusion temperature of βPP was changed to 220°C; the percent neck-down during longitudinal stretching in the machine direction was changed to 45%; and that stretching during the annealing treatment after stretching was not performed, and a porous polypropylene film roll was rolled up by 500 m. The β-crystal formability of the polypropylene resin composition that was the material of this porous polypropylene film was 86%.

Similarly to Comparative Example 1, the central part of the film roll obtained was evaluated for thickness uniformity using eddy current according to the evaluation of thickness uniformity described in WO 2002/066233, and the thickness uniformity was found to be 0.05; however, the unevenness of the thickness measured by the evaluation method of the present invention was very poor at 33%, showing that the variability in battery properties was large. Further, this porous polypropylene film roll had an air resistance of 750 seconds, the average value of the porosities of 58%, and a uniformity of porosity of 0.15. Further, as a result of the measurement using this porous polypropylene film, the uniformity of battery performance was C; the ionic conductivity was C; and the low-rate power characteristic was B.

(Comparative Example 3)

Ninety parts by mass of βPP and 10 parts by mass of the PE master were mixed, and the resulting mixture was fed to a single-screw extruder, melt-extruded at 220°C, discharged from a T-die onto a casting drum having a controlled surface temperature of 120°C after foreign matter was removed through a sintered filter, and cast so as to be in contact with the drum for 15 seconds to obtain a non-oriented sheet. Casting was performed using an air knife in such a manner that the wind speed of compressed air from the air knife was 7 m/sec and that the compressed air was blown from the direction vertical to the tangential direction in the landing point of a polymer on the casting drum.

Then, preheating was carried out using a ceramic roller heated to 100°C, and 4-fold longitudinal stretching was performed in the machine direction of the film. At this time, the film temperature was 97°C. Once cooled, the film was then introduced into a tenter-type stretching machine with the ends held by clips, and transversely stretched 6.2-fold at 135°C at a stretching rate of 1,000%/min. The film was heat-treated as it was at 155°C for 7 seconds while being relaxed in the width direction by 5%, after which both the ear portions in the film width direction were slit by 200 mm each for removal, and the film was rolled up by 500 m around a paper tube with an outer diameter of 172.4 mm at a tension of 25 N/m to obtain a porous polypropylene film roll having a thickness of 20 μm. The β-crystal formability of the polypropylene resin composition that was the material of this porous polypropylene film was 82%. This porous polypropylene film roll had an unevenness of the thickness of 21%, an air resistance of 250 seconds, the average value of the porosities of 72%, and a uniformity of porosity of 0.11. Further, as a result of the measurement using this porous polypropylene film, the uniformity of battery performance was C; the ionic conductivity was B; and the low-rate power characteristic was A.

(Example 6)

Film formation was carried out in the same manner as in Comparative Example 3 except that the preheating roller temperature was 140°C and that a radiation heater was used such that the film temperature during longitudinal stretching in the machine direction was 142°C to obtain a porous polypropylene film roll having a thickness of 16 μm. The β-crystal formability of the polypropylene resin composition that was the material of this porous polypropylene film was 82%. This porous polypropylene film roll had an unevenness of the thickness of 13%, an air resistance of 600 seconds, the average value of the porosities of 57%, and a uniformity of porosity of 0.04. Further, as a result of the measurement using this porous polypropylene film, the uniformity of battery performance was B; and the low-rate power characteristic was B. Although the ionic conductivity was C, this porous polypropylene film was suitable as a separator for a relatively low-power electric storage device for household or stationary use.

(Comparative Example 4)

Ninety parts by mass of βPP and 10 parts by mass of the PE master were mixed, and the resulting mixture was fed to a single-screw extruder, melt-extruded at 210°C, discharged from a T-die through a sintered filter with a 40 μm cut-off onto a casting drum having a controlled surface temperature of 120°C, cast using an air knife so as to be in close contact with the drum for 15 seconds, and further slowly cooled on a metal roller having a controlled surface temperature of 80°C for 3 seconds to obtain a non-oriented sheet. The setting of the air knife was performed in the same manner as in Comparative Example 1.

Then, heating was carried out using a ceramic roller heated to 120°C, and 5-fold longitudinal stretching was performed in the machine direction of the film by a difference in peripheral velocity of the roller also heated to 120°C and the roller heated to 125°C. At this time, the film temperature in the stretching section was measured using a radiation thermometer (emissivity ($\varepsilon$) was set at 0.95) to be 118°C. After the longitudinal stretching, the film was treated with a group of rollers heated to 125°C for 2 seconds in total, and then cooled with a roller having a controlled temperature of 30°C. The neck-down during the longitudinal stretching in the machine direction was 26%.

Next, the film was introduced into a tenter-type stretching machine with the ends held by clips and transversely stretched 6.5-fold in the width direction at 150°C. In the stretching, the transverse stretching rate was constant at 1,800%/min from the start to the end of the stretching. Then, the film was heat-treated at 158°C for 6 seconds while being relaxed in the width direction by 10%, after which both the ear portions in the film width direction were slit by 200 mm each for removal, and the film was rolled up by 500 m around a paper tube with an outer diameter of 172.4 mm at a tension of 25 N/m to obtain a porous polypropylene film roll having a thickness of 25 μm. The β-crystal formability of the polypropylene resin composition that was the material of this porous polypropylene film was 82%. This porous polypropylene film roll had an unevenness of the thickness of 16%, an air resistance of 220 seconds, the average value of the porosities of 74%, and a uniformity of porosity of 0.10. Further, as a result of the measurement using this porous polypropylene film, the uniformity of battery performance was C; the ionic conductivity was B; and the low-rate power characteristic was A.

(Example 7)

A porous film was formed in the same manner as in Example 1 except that βPP was 100 parts by mass. In the film forming, 4-fold longitudinal stretching was performed in the machine direction of the film by a difference in peripheral velocity of the stretching roller heated to 125°C during stretching in the film machine direction and the stretching roller heated to 120°C. The film temperature was 125°C. The neck-down during the longitudinal stretching in the machine direction was 22%.

Next, the film was introduced into a tenter-type stretching machine with the ends held by clips and transversely stretched 3.5-fold in the width direction at 150°C. In the stretching, the transverse stretching rate was constant at 3,000%/min from the start to the end of the stretching. Then, the film was heat-treated at 158°C for 6 seconds while being relaxed in the width direction by 10%, after which both the ear portions in the film width direction were slit by 200 mm each for removal, and the film was rolled up by 500 m around a paper tube with an outer diameter of 172.4 mm at a tension of 25 N/m to obtain a porous polypropylene film roll having a thickness of 25 μm. The β-crystal formability of the polypropylene resin composition that was the material of this porous polypropylene film was 86%. This porous polypropylene film roll had an unevenness of the thickness of 14%, an air resistance of 450 seconds, the average value of the porosities of 51%, and a uniformity of porosity of 0.08. Further, as a result of the measurement using this porous polypropylene film, the uniformity of battery performance was B; the ionic conductivity was B; and the low-rate power characteristic was B, showing that this porous polypropylene film was suitable as a separator for a high-power electric storage device.

(Example 8)

Film formation was carried out by the same method as in Example 2 except that, in the preheating before longitudinal stretching in the machine direction, only the third roller from the upstream side among the installed seven ceramic rollers for preheating was heated to 135°C, and the other six rollers were 125°C similarly to Example 2 to obtain a porous polypropylene film roll having a thickness of 20 μm. At this time, the contact time with the roller at 135°C in the preheating was 5 seconds. The film temperature during longitudinal stretching in the machine direction was 132°C, and the neck-down was 18%. The β-crystal formability of the polypropylene resin composition that was the material of this porous polypropylene film was 82%. This porous polypropylene film roll had an unevenness of the thickness of 5%, an air resistance of 200 seconds, the average value of the porosities of 71%, and a uniformity of porosity of 0.05. Further, as a result of the measurement using this porous polypropylene film, the uniformity of battery performance was A; the ionic conductivity was A; and the low-rate power characteristic was A, showing that this porous polypropylene film was especially suitable for a separator for a high-power electric storage device.

(Example 9)

Film formation was carried out by the same method as in Example 1 except that the angle of the air knife from the direction vertical to the tangential direction in the landing point of a polymer was 0° and that, in the preheating before longitudinal stretching in the machine direction, only the third roller from the upstream side among the installed seven ceramic rollers for preheating was heated to 137°C, and the other six rollers were 125°C similarly to Example 1 to obtain a porous polypropylene film roll having a thickness of 20 μm. At this time, the contact time with the roller at 137°C in the preheating was 5 seconds. The film temperature during longitudinal stretching in the machine direction was 132°C, and the neck-down was 18%. The β-crystal formability of the polypropylene resin composition that was the material of this porous polypropylene film was 82%. This porous polypropylene film roll had an unevenness of the thickness of 10%, an air resistance of 280 seconds, the average value of the porosities of 69%, and a uniformity of porosity of 0.06. Further, as a result of the measurement using this porous polypropylene film, the uniformity of battery performance was A; the ionic conductivity was B; and the low-rate power characteristic was A, showing that this porous polypropylene film was suitable as a separator for a high-power electric storage device.

(Comparative Example 5)

Film formation was carried out by the same method as in Example 1 except that the angle of the air knife from the direction vertical to the tangential direction in the landing point of a polymer was 0° and that the slit opening at the tip of the air knife was 1.5 mm (the wind speed was 6 m/sec) to obtain a porous polypropylene film roll having a thickness of 20 $\mu$m. At this time, the film temperature during longitudinal stretching in the machine direction was 132°C, and the neck-down was 21%. The $\beta$-crystal formability of the polypropylene resin composition that was the material of this porous polypropylene film was 81%. This porous polypropylene film roll had an unevenness of the thickness of 18%, an air resistance of 230 seconds, the average value of the porosities of 71%, and a uniformity of porosity of 0.12. Further, as a result of the measurement using this porous polypropylene film, the uniformity of battery performance was C; the ionic conductivity was B; and the low-rate power characteristic was A.

(Comparative Example 6)

Film formation was carried out by the same method as in Example 1 except that the angle of the air knife between the direction vertical to the tangential direction in the landing point of a polymer and the downstream direction was 15° and that the slit opening at the tip of the air knife was 1.5 mm (the wind speed was 6 m/sec) to obtain a porous polypropylene film roll having a thickness of 20 $\mu$m. At this time, the film temperature during longitudinal stretching in the machine direction was 132°C, and the neck-down was 21%. The $\beta$-crystal formability of the polypropylene resin composition that was the material of this porous polypropylene film was 83%. This porous polypropylene film roll had an unevenness of the thickness of 16%, an air resistance of 210 seconds, the average value of the porosities of 71%, and a uniformity of porosity of 0.11. Further, as a result of the measurement using this porous polypropylene film, the uniformity of battery performance was C; the ionic conductivity was B; and the low-rate power characteristic was A.

(Comparative Example 7)

Film formation was carried out by the same method as in Example 5 except that, in place of $\beta$PP, 99.76 parts by mass of a homopolypropylene FLX80E4 available from Sumitomo Chemical Co., Ltd., 0.04 parts by mass of N,N'-dicyclohexyl-2,6-naphthalene dicarboxyamide (NU-100 available from New Japan Chemical Co., Ltd.) that serves as a $\beta$-crystal nucleating agent, and further 0.1 parts by mass each of "IRGANOX" (registered trademark) 1010 and "IRGAFOS" (registered trademark) 168 available from Ciba Specialty Chemicals K. K. that serve as an antioxidant were fed as a material from a scale hopper to a twin-screw extruder such that they are mixed at the above ratio, melt-kneaded at 300°C, discharged from a die in strands, cooled to solidify in a water tank at 25°C, and cut into chips of polypropylene composition (MFR: 8 g/10 min) to be used as a material resin of a film, and that 100 parts by mass of the material was fed to a single-screw extruder to obtain a porous polypropylene film roll having a thickness of 20 $\mu$m. At this time, the film temperature during longitudinal stretching in the machine direction was 125°C, and the neck-down was 21%. The $\beta$-crystal formability of the polypropylene resin composition that was the material of this porous polypropylene film was 82%. This porous polypropylene film roll had an unevenness of the thickness of 14%, an air resistance of 1000 seconds, the average value of the porosities of 40%, and a uniformity of porosity of 0.05. Further, as a result of the measurement using this porous polypropylene film, the uniformity of battery performance was B; the ionic conductivity was C; and the low-rate power characteristic was C.

[Table 1]

|  | Example 1 | Example 2 | Example 3 | Example 4 | Example 5 |
|---|---|---|---|---|---|
| $\beta$-crystal formability (%) | 82 | 82 | 82 | 80 | 86 |
| $\beta$-crystal fraction (%) | 44 | 48 | 48 | 54 | 53 |
| Unevenness of thickness (%) | 10 | 7 | 6 | 13 | 15 |
| Air resistance (sec) | 180 | 130 | 200 | 280 | 350 |
| The average value of the porosities (%) | 73 | 76 | 71 | 68 | 63 |
| Uniformity of the porosities | 0.06 | 0.05 | 0.06 | 0.09 | 0.08 |
| Uniformity of battery performonce | A | A | A | B | B |
| Ionic conductivity | A | A | A | B | B |

(continued)

| | Example 1 | Example 2 | Example 3 | Example 4 | Example 5 |
|---|---|---|---|---|---|
| Low-rate power characteristic | A | A | A | A | B |

[Table 2]

| | Comparative Example 1 | Comparative Example 2 | Comparative Example 3 | Example 6 | Comparative Example 4 |
|---|---|---|---|---|---|
| $\beta$ -crystal formability (%) | 86 | 86 | 82 | 82 | 82 |
| $\beta$ -crystal fraction (%) | 38 | 39 | 42 | 43 | 40 |
| Unevenness ofthickness (%) | 27 | 33 | 21 | 13 | 16 |
| Air resistance (sec) | 800 | 750 | 250 | 600 | 220 |
| The average value of the porosities (%) | 57 | 58 | 72 | 57 | 74 |
| Uniformity of the porosities | 0.13 | 0.15 | 0.11 | 0.04 | 0.10 |
| Uniformity of battery performonce | C | C | C | B | C |
| Ionic conductivity | C | C | B | C | B |
| Low-rate power characteristic | B | B | A | B | A |

[Table 3]

| | Example 7 | Example 8 | Example 9 | Comparative Example 5 | Comparative Example 6 | Comparative Example 7 |
|---|---|---|---|---|---|---|
| $\beta$ -crystal formability (%) | 86 | 82 | 82 | 81 | 83 | 82 |
| $\beta$ -crystal fraction (%) | 44 | 50 | 55 | 43 | 38 | 52 |
| Unevenness ofthickness (%) | 14 | 5 | 10 | 18 | 16 | 14 |
| Air resistance (sec) | 450 | 200 | 280 | 230 | 210 | 1000 |
| The average value of the porosities (%) | 51 | 71 | 69 | 71 | 71 | 40 |

(continued)

|  | Example 7 | Example 8 | Example 9 | Comparative Example 5 | Comparative Example 6 | Comparative Example 7 |
|---|---|---|---|---|---|---|
| Uniformity of the porosities | 0.08 | 0.05 | 0.06 | 0.12 | 0.11 | 0.05 |
| Uniformity of battery performance | B | A | A | C | C | B |
| Ionic conductivity | B | A | B | B | B | C |
| Low-rate power characteristic | B | A | A | A | A | C |

INDUSTRIAL APPLICABILITY

The porous polypropylene film roll of the present invention has not only excellent porosity but also a uniform form with small unevenness of the thickness, and therefore, when used as a separator for an electric storage device, the distance between electrodes can be held constant. As a result, an electric storage device of uniform quality can be obtained. Therefore, the porous polypropylene film roll of the present invention can be suitably used as a separator for an electric storage device, especially for a lithium ion battery that is a nonaqueous electrolyte secondary battery.

**Claims**

1.  A porous polypropylene film roll of which a porous polypropylene film comprising a polypropylene resin and having the average value of the porosities, $\varepsilon_{ave}$, of 45 to 90% is wound around a core, wherein the unevenness of the thickness in the film machine direction calculated by Equation [1] is not more than 15%:

$$\text{Unevenness of the thickness (\%)} = (Tmax - Tmin) / Tave \times 100 \quad [1]$$

wherein,

Tave: average thickness of the thickness at 100 points measured at 30 mm intervals in the machine direction;
Tmax: maximum thickness of the thickness at 100 points measured at 30 mm intervals in the machine direction; and
Tmin: minimum thickness of the thickness at 100 points measured at 30 mm intervals in the machine direction.

2.  A porous polypropylene film roll of which a porous polypropylene film comprising a polypropylene resin and having the average value of the porosities, $\varepsilon_{ave}$, of 60 to 90% is wound around a core, wherein the unevenness of the thickness in the film machine direction calculated by Equation [1] is not more than 15%:

$$\text{Unevenness of the thickness (\%)} = (Tmax - Tmin) / Tave \times 100 \quad [1]$$

wherein,

Tave: average thickness of the thickness at 100 points measured at 30 mm intervals in the machine direction;
Tmax: maximum thickness of the thickness at 100 points measured at 30 mm intervals in the machine direction; and
Tmin: minimum thickness of the thickness at 100 points measured at 30 mm intervals in the machine direction.

3.  The porous polypropylene film roll according to claim 1 or 2, wherein the β-crystal formability of a polypropylene resin composition used as a material of the porous polypropylene film is from 50 to 90%.

4. The porous polypropylene film roll according to any one of claims 1 to 3, wherein the value of ($\varepsilon$max - $\varepsilon$min) / $\varepsilon$ave is from 0 to 0.08, wherein $\varepsilon$max is the maximum value of the porosities; $\varepsilon$min is the minimum value of the porosities; and $\varepsilon$ave is the average value of the porosities at 60 points measured at 50 mm intervals in the film machine direction.

5. The porous polypropylene film roll according to any one of claims 1 to 4, wherein the average value of the porosities, $\varepsilon$ave, is 70 to 85%.

<div align="center">INTERNATIONAL SEARCH REPORT</div>

| | International application No. |
|---|---|
| | PCT/JP2010/065702 |

A. CLASSIFICATION OF SUBJECT MATTER
*C08J9/00*(2006.01)i, *C08L23/12*(2006.01)i

According to International Patent Classification (IPC) or to both national classification and IPC

B. FIELDS SEARCHED

Minimum documentation searched (classification system followed by classification symbols)
C08J9/00, C08L23/12

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 02/066233 A1 (New Japan Chemical Co., Ltd.),<br>29 August 2002 (29.08.2002),<br>page 48; table 1; page 10, lines 4 to 25;<br>page 16, lines 24 to 29<br>& US 2007/0269719 A1 & US 2004/0096744 A1<br>& EP 1369221 A1 & DE 60234320 D<br>& CA 2438243 A | 1–4<br>5 |
| Y | WO 2007/046225 A1 (Toray Industries, Inc.),<br>26 April 2007 (26.04.2007),<br>paragraphs [0011], [0104], [0177] to [0179],<br>[0231]; table 2<br>& US 2004/0096744 A1 & EP 1369221 A1<br>& DE 60234320 D | 5 |

☒ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 30 September, 2010 (30.09.10) | 12 October, 2010 (12.10.10) |

| Name and mailing address of the ISA/<br>Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2010/065702

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2005-144829 A  (Chisso Corp.),<br>09 June 2005 (09.06.2005),<br>paragraph [0016]<br>(Family: none) | 4 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 55131028 A
- JP 55032531 B
- JP 57203520 A
- JP 63199742 A
- JP 6100720 A
- JP 9255804 A
- WO 2002066233 A
- JP 2000230072 A
- JP 2001002812 A
- JP 2004196870 A
- JP 7216120 A
- JP 5310665 A